# EUROPÄISCHE PATENTSCHRIFT

(11) **EP 3 270 047 B1**
(45) Veröffentlichungstag und Bekanntmachung des Hinweises auf die Patenterteilung: **05.02.2020**
(21) Anmeldenummer: 17160595.9
(22) Anmeldetag: 13.03.2017
(51) Int. Cl.: F21V 8/00, F21K 9/61, F21V 7/00, F21Y 115/10, F21Y 113/00

(54) **FLACHLEUCHTE**
FLAT LIGHT
APPAREIL D'ÉCLAIRAGE PLAT

(30) Priorität: 11.03.2016 DE 102016104465
(43) Veröffentlichungstag der Anmeldung: 17.01.2018
(73) Patentinhaber: Trilux GmbH & Co. KG, 59759 Arnsberg (DE)
(72) Erfinder: UFERMANN, Helmut, 59457 Werl-Westönnen (DE)
(74) Vertreter: Lippert Stachow Patentanwälte Rechtsanwälte

(56) Entgegenhaltungen:
- EP-A1- 2 360 431
- EP-A1- 2 711 750
- EP-A1- 2 796 770
- US-A1- 2015 211 710

## Beschreibung

Die Erfindung betrifft Flachleuchte umfassend ein Leuchtengehäuse mit einer einem Baukörper zugwandten Leuchtengehäuseoberseite, die eine Gehäuseebene definiert, sowie einer Leuchtengehäuseunterseite umfassend eine Lichtaustrittsöffnung ausgebildet zum Austritt eines Direktlichtstroms zur direkten Ausleuchtung einer Sehaufgabe, wobei das Leuchtengehäuse zudem ausgebildet ist zur Aufnahme eines LEDs umfassenden Direktleuchtmittels, das den durch diese erzeugten Direktlichtstrom über ein optisches System direkt auf die Sehaufgabe abstrahlt und auf der zudem ein Geräteträger zur Aufnahme weiterer Leuchtenkomponenten vorgesehen ist.

Eine solche Leuchte ist beispielsweise aus der DE 20 2012 104 567 U1 bekannt.

Bei dieser Leuchte nimmt das Leuchtengehäuse neben den in diesem angeordneten LEDs das optische System auf, welches eine Lichtleiterplatte sowie eine in der Direktlichtrichtung vor dieser angeordnete Leuchtenabdeckung umfasst. Die Scheiben sind umfänglich von dem Gehäuse eingefasst bzw. in diesem aufgenommen. Das Gehäuse selbst ist aus mehreren Metallprofilen zusammengesetzt.

Der Rahmen des Leuchtengehäuses bildet bei dieser Art von Leuchten einen deutlich von unten sichtbaren Schatten, ist also als solcher deutlich sichtbar obwohl dieser von der Leuchtenabdeckung unterseitig verdeckt wird.

An diesem Stand der Technik besteht der Nachteil, dass das Indirektleuchtmittel oberseitig auf dem Geräteträger angeordnet ist, was zum einen die Bauhöhe ungewünscht erhöht und zum anderen damit die Einsatzmöglichkeiten einschränkt.

Die Offenlegungsschrift EP 2 796 770 A1 betrifft eine Leuchte mit einer Lichterzeugungseinheit zur Erzeugung von Licht und mit einem Rahmenelement, durch das ein Rahmen der Leuchte gebildet ist, wobei das Rahmenelement über Rastverbindungselemente an der Lichterzeugungseinheit gehalten angeordnet ist und wobei die Lichterzeugungseinheit ein Trägerblech sowie eine Lichtleiterplatte und eine LED-Lichtquelle zur Erzeugung des Lichtes umfasst und das Rahmenelement durch Profilelemente gebildet ist. In Einbaulage ist obenseitig auf dem Trägerblech eine Gerätebox, beispielsweise zur Aufnahme eines Betriebsgeräts zur Stromversorgung der Lichterzeugungseinheit, angeordnet.

Ausgehend von dem beschriebenen Stand der Technik und der damit geschilderten Nachteile, liegt der Erfindung die Aufgabe zugrunde, diese Nachteile zumindest teilweise zu vermeiden, die Funktionalität der Leuchte zu erhöhen und insbesondere eine Leuchte vorzusehen, die einen besonders harmonischen und flachen Eindruck erweckt und einfacher umgerüstet werden kann zwischen einer Deckenanbau- und einer Pendelleuchte, also variabler einsetzbar und einfacher umrüstbar ist.

Erfindungsgemäß wird diese Aufgabe bei einer Flachleuchte der eingangs genannten Art bereits teilweise durch die Merkmale der unabhängigen Ansprüche gelöst; vorteilhafte Weiterentwicklungen sind in den Unteransprüchen wiedergegeben.

Demgemäß ist das Leuchtengehäuse als Flachgehäuse ausgebildet, welches eine deutlich höhere Breite als Höhe aufweist, dass das Leuchtengehäuse auf der Leuchtengehäuseoberseite einen Montagekanal umfasst, und dass der Montagekanal ausgebildet ist zur Aufnahme der Indirektlichtquelle sowie des Geräteträgers.

Durch die erfindungsgemäße Ausbildung des Montagekanals in dem Leuchtengehäuse in der Form eines vorzugsweise rechteckig nach unten abgesenkten Abschnitts werden zwei wesentliche Vorteile erzielt. Zum einen ist es möglich, den in dem Leuchtengehäuse nicht verwendeten Bauraum oberhalb des optischen Systems höhereduzierend für die Anordnung von Leuchtenkomponenten auf der Oberseite des Leuchtengehäuses mit Zugänglichkeit ohne Öffnung des Leuchtengehäuses einzusetzen. Diese Ausgestaltung hat ferner den Vorteil, dass sich durch die geometrische Gestalt ein erhöhtes Flächenträgheitsmoment gegen Biegung ergibt und die Leuchte bzw. das Leuchtengehäuse insofern eine deutlich höhere Längssteifigkeit im Vergleich zu einem Leuchtengehäuse ohne Montagekanal aufweist. Damit sind ohne weiteres Leuchtengehäuse realisierbar, die bevorzugte Längen von 1000 oder 1500 mm aufweisen und nur an den Enden abgehängt sein können ohne weitere Verstärkungen.

Darüber hinaus weist die erfindungsgemäße Leuchte eine Indirektlichtquelle auf, welche im Montagekanal aufgenommen ist zur Erweiterung der Funktionalität der Flachleuchte.

Vorzugsweise weist der Montagekanal Hinterschnitte auf, die nicht nur das Flächenträgheitsmoment weiter erhöhen, sondern als Halter für Leuchtenkomponenten eingesetzt werden können. Bevorzugt weist der Montagekanal an den beiden äußeren Vertikalschenkeln Hinterschnitte auf, so dass diese als Führungs- bzw. Befestigungsleisten zur Montage der Leuchtenkomponenten einsetzbar sind; besonders bevorzugt für den Geräteträger, der durch diese Ausgestaltung also in den Montagekanal eingeschoben werden kann.

Der vorgeschlagene Montagekanal dient also nicht nur dazu, den Geräteträger und weitere Leuchtenkomponenten oberseitig bauraumoptimiert und von außen zugänglich auf dem Leuchtengehäuse anzuordnen, sondern erhöht auch durch entsprechende Ausbildung die Biegesteifigkeit des Leuchtengehäuses.

Bevorzugt ist der Montagekanal als gegenüber der Leuchtengehäuseoberseite nach unten, also zum Inneren des Leuchtengehäuses versetzte Struktur ausgestaltet und definiert somit in dem Leuchtengehäuse eine - obere - Montagekanalöffnung und davon herabgesetzt eine - untere - Montagekanalebene.

Vorzugsweise ist der Montagekanal einstückig an dem Leuchtengehäuse angeformt, kann in einer alternativen Ausführungsform aber auch als ansetzbares, getrenntes Bauteil ausgebildet sind.

In der besonders bevorzugten Ausführungsform ist der Montagekanal als rechtwinkliges Gebilde gestaltet und umfasst sich von der Oberseite des Leuchtengehäuses zur Montagekanalebene ersteckende Montagekanalseitenwände.

Der Montagekanal kann zudem ausgebildet sein zur Befestigung von Leuchtenkomponenten, kann also zusätzliche Befestigungsmittel ausgebildet als z.B. Hinterschnitte, Vorsprünge oder dergleichen umfassen, die als Befestigungsmittel eingesetzt werden können, besonders bevorzugt als schubladenartig fungierende Einschübe für komplementär ausgebildete Einschubleisten, insbesondere an dem Geräteträger. Besonders bevorzugt umfassen die Befestigungsmittel an den Montagekanalseitenwänden vorgesehene Hinterschnitte bzw. Halteleisten.

Der Montagekanal ist demnach insbesondere ausgebildet als rinnenförmiger Körper, der gegenüber der Leuchtengehäuseoberseite in das Innere der Leuchte nach unten versetzt ist und vorzugsweise eine deutlich größere Breite als Tiefe aufweist. Vorzugsweise ist der Montagekanal etwa 10 bis 13 Mal so breit wie tief, z.B. weist dieser bei einer Tiefe von 6 bis 8 mm von der Oberfläche des Leuchtengehäuses am Rand des Montagekanals bis zur Oberfläche des Montagekanals eine Breite von ca. 74 mm auf.

Für den Fachmann ist verständlich, dass die erfindungsgemäßen Vorteile der einfachen Zugänglichkeit ohne das Erfordernis der Öffnung des Leuchtengehäuses, die Möglichkeit der Montage und Kaschierung von Leuchtenkomponenten sowie die durch die Geometrie erzielte Erhöhung der Biegesteifigkeit auch erzielt wird, wenn der Montagekanal an anderen Stellen des Leuchtengehäuses ausgebildet ist, dieser also nicht zwangsläufig an der Oberseite des Leuchtengehäuses ausgebildet sein muss.

Eine bevorzugte Ausführungsform der erfindungsgemäßen Leuchte weist zudem mindestens eine Indirektlichtquelle zur Erzeugung einer Indirektbeleuchtung mittels eines Direktlichtstrom entgegen strahlenden Indirektlichtstroms auf.

Die Erfindung betrifft daneben eine Flachleuchte umfassend ein Leuchtengehäuse mit einer einem Baukörper in Einbaulage zugwandten Oberseite und einer Leuchtengehäuseunterseite mit einer Lichtaustrittöffnung ausgebildet zum Austritt eines Direktlichtstroms zur direkten Ausleuchtung einer Sehaufgabe. Das Leuchtengehäuse ist ausgebildet zur Aufnahme eines LEDs umfassenden Direktleuchtmittels, das den durch diese erzeugten Direktlichtstrom über ein optisches System direkt auf die Sehaufgabe strahlt. Ferner weist diese Flachleuchte eine Indirektlichtquelle auf, welche einen dem Direktlichtstrom entgegen gerichteten Indirektlichtstrom zur Erzeugung einer Indirektbeleuchtung in einer Indirektlichtrichtung aufweist. Schließlich ist auf der Leuchtengehäuseoberseite ein Geräteträger zur Aufnahme weiterer Leuchtenkomponenten angeordnet. Das optische System umfasst vorzugsweise eine Lichtleiterplatte bzw. -scheibe, in welche das Direktleuchtmittel den Direktlichtstrom über mindestens einen Rand der Leichtleiterplatte einkoppelt und die Lichtleiterplatte ist ausgebildet, um das das eingekoppelte Licht zur Erzeugung des Direktlichtstroms in einer Direktlichtrichtung durch auf die Sehaufgabe abzustrahlen.

Auch diese Flachleuchte erzeugt bereits einen diffusen, also eingeblendeten Direktlichtstrom zur direkten Ausleuchtung der Sehaufgabe, ist aber aus designtechnischen Gründen mit dem Nachteil verbunden, dass der äußere Rand des Leuchtengehäuses, welcher das optische System umseitig umschließt bzw. einfasst von unten als solches deutlich sichtbar ist, was für bestimmte Anwendungsfälle nicht wünschenswert ist. Wünschenswert ist häufig eine homogene gleichmäßiger Ausleuchtung der gesamten von unten sichtbaren Direktlichtaustrittsfläche der Leuchtenabdeckung, also auch deren Randbereich, damit keine Unterbrechungen in der Gesamtlichtfläche auftreten.

Zur Lösung dieses Problems schlägt die Erfindung getrennt von dem vorgenannten ersten Problem vor, dass das optische System ferner in der Direktlichtrichtung vor der Lichtleiterplatte angeordnete Entblendungsscheibe umfasst.

Diese zusätzliche Entblendungsscheibe ermöglicht eine besonders homogene Ausleuchtung der Leuchtenabdeckung, verbirgt seitliche Lichtquelle und erzeugt durch die zusätzliche Lichtstreuung insbesondere den Rand der Flachleuchte.

Bevorzugt ist die die Entblendungsscheibe als Prismenscheibe mit einer vorzugsweise Mikroprismenstruktur ausgebildet, die durchgängig homogen oder sektional unterschiedlich ausgebildet sein kann.

Die Entblendungsscheibe ist vorzugsweise als transluzente Kunststoffscheibe ausgebildet, wobei das bevorzugte Material PMMA ist.

Bei in der üblichen Anwendung ist die Entblendungsscheibe größenmäßig an die Lichtleiterplatte angepasst, womit gemeint ist, dass die Entblendungsscheibe also den maximalen Bereich in Direktlichtrichtung vor der Lichtleiterplatte abdeckt bzw. einnimmt, um die Entblendung zu gewährleisten.

Dabei kann die Entblendungsscheibe auch geometrisch an die Gegebenheiten des Leuchtengehäuses angepasst sein zur Reduzierung eines ungewünschten Durchtritts von Direktlicht. Dieses kann z.B. durch eine Abkantung an den Rändern der Entblendungsscheibe erfolgen, damit diese unmittelbar in der Nähe bzw. an das angrenzende Leuchtengehäuse anliegt bzw. übergangslos angepasst ist.

Bei einer bevorzugten Weiterentwicklung wird die Entblendung weiter dadurch verbessert, dass die in der Lichtaustrittsöffnung der Flachleuchte angeordnete Leuchtenabdeckung zusätzlich Entblendungseigenschaften aufweist. Dieses erfolgt besonders einfach dadurch, dass eine an der Leuchtenabdeckung unterseitige Lichtaustrittsfläche, welche dem Betrachter von unten sichtbar ist, aufgeraut ist, was vorzugsweise durch einfaches Sandstrahlen erfolgt.

Es hat sich ferner gezeigt, dass die Kaschierung der Ränder des Flachleuchtengehäuses besonders einfach dadurch verbessert werden kann, dass zwischen dem unteren Ende des Leuchtengehäuses und der angrenzenden, dieses untere Ende verdeckende Leuchtengehäuse ein Abstand zur Bildung einer Schattenfuge ausgebildet ist. Dieses wird dadurch vereinfacht, dass die Leuchtenabdeckung geometrisch angepasst ist an die geometrischen Abmessungen des Leuchtengehäuses, also die Leuchtenabdeckung das Leuchtengehäuse in der Betrachtungsrichtung von unten gegen Blicke verdeckt. Als ästhetisch besonders ansprechend und ausreichend zur Kaschierung hat sich eine Höhe der Leuchtenabdeckung im Verhältnis zu Höhe des Leuchtengehäuses von etwa ein Drittel herausgestellt.

Bevorzugt ist der an die Leuchtenabdeckung angrenzende Bereich des Leuchtengehäuses reflektierend ausgebildet, insbesondere zumindest im Bereich der Schattenfuge weiß lackiert.

Bevorzugt sind geometrische Gestalten des Leuchtengehäuses und des Geräteträgergehäuses zumindest ähnlich ausgebildet, wobei das Leuchtengehäuse bevorzugt etwa dreimal so breit und doppelt so lang ist wie das Geräteträgergehäuse.

Schließlich betrifft die vorliegende Darstellung das wiederrum von den ersten Problemen völlig getrennte technische Problem, die Umgestaltung des Geräteträgers zwischen dem Anwendungsfall als Deckenanbauleuchte, für welchen der Geräteträger eine höhere Stabilität aufweisen muss, und der Montage als Pendelleuchte, in welcher der Geräteträger nur als die Geräte kaschierendes Gehäuse ausbildet sein muss, also insofern keine Tragfunktion für die Leuchte bereitstellen muss. Die Darstellung betrifft zudem eine Verbindungsanordnung bzw. ein Verbindungssystem zur lösbaren Befestigung eines Geräteträgers mit einem Geräteträgergehäuse an einem Leuchtengehäuse, insbesondere für eine Flachleuchte der eingangs beschriebenen Art. Diese Verbindungsanordnung umfasst einen Erstfügepartner ausgebildet zur Befestigung an dem Leuchtengehäuse und einen das Geräteträgergehäuse umfassenden, zu dem ersten Fügepartner komplementär ausgebildeten Zweitfügepartner, wobei die Fügepartner ausgebildet sind, in Einbaulage so lösbar miteinander verbunden zu werden, dass zumindest das Geräteträgergehäuse an dem Leuchtengehäuse lagefixiert ist.

Bei einer ersten Ausführungsform ist Verbindungsanordnung für den Einsatz als Deckenpendelleuchte ausgebildet, bei welcher das Geräteträgergehäuse nicht das Gesamtgewicht der Flachleuchte tragen muss, sondern nur kaschierend die Geräte auf dem Leuchtengehäuse verdeckt, ist der Erstfügepartner als ein Geräteträgerunterteil ausgebildet, welches einen sich in Längsrichtung erstreckenden Grundschenkel ausgebildet zur Befestigung auf dem Leuchtengehäuse und aus einer durch diesen Grundschenkel definierten Ebene herausragende Kopfschenkel aufweist, die ihrerseits ausgebildet sind zur Befestigung von Seilen einer Seilabhängung zur Befestigung der Leuchte als Deckenpendelleuchte abgehängt von einer Decke. Vorzugsweise umfassen die Kopfschenkel Haltelaschen mit Aufnahmen für die Seile der Deckenabhängung, die besonderes bevorzugt einen runden Einsteckbereich für eine Seilkausche umfassen, durch welche also die Seilkauschen von oben her eingesteckt werden können, und einen an diesen Einsteckbereich sich seitlich anschließenden verengten Einklemmbereich, welcher die am unteren Ende des Seils befestigten Seilkauschen in Einbaulage hintergreift.

Bei dieser Ausführungsform wird das Gewicht der Flachleuchte also von dem Geräteträgerunterteil und den an diesem befestigten bzw. eingeengten Seilen getragen und das Geräteträgeroberteil dient lediglich als die Geräte und das Geräteträgerunterteil abdeckende Gehäuse, welches entsprechende Durchgangsöffnungen für die Seile mit den Seilkauschen aufweist.

Bei der Verwendung einer Leuchte mit einem zuvor beschriebenen Montagekanal kann das Geräteträgerunterteil vorzugsweise in Längsrichtung parallel zum Grundschenkel seitlich äußere Einschubleisten aufweisen, die besonders bevorzugt einstückig an dem Grundschenkel ausgebildet sind zum Einschieben in einen korrespondierend ausgebildeten Fügepartner des Leuchtengehäuses.

Zwischen den Einschubleisten und dem Gehäuse bzw. dem Montagekanal können ferner in Einbaulage lagefixierende Rastmittel ausgebildet sein. Bevorzugt sind diese als einfache Distanzprägungen an den Einschubleisten ausgebildet.

Die Modularität wird weiter erhöht, wenn der Montagekanal mindestens einen Hinterschnitt bzw. eine Hintergreifung aufweist, mit dem zumindest der Geräteträger, aber auch andere Leuchtenkomponenten lösbar verbindbar sind. Vorzugsweise definiert der Montagekanal eine Kanalebene, welche gegenüber der Gehäuseebene nach unten versetzt bzw. abgesenkt ist. Somit sind der Geräteträger, aber auch die Indirektleuchtmittel in diesem heruntergesetzten Montagekanal einsetzbar, wodurch die Gesamthöhe der Leuchte reduziert wird und der Montagekanal zusätzlich noch mehr gegenüber dem Leuchtengehäuse zurücktritt und damit den filigranen und leichten Aufbau der Flachleuchte unterstreicht.

Bei der bevorzugten Ausführungsform beträgt das Verhältnis zwischen der Höhe des Montagekanals und der Höhe des Leuchtengehäuses zumindest abschnittsweise etwa 1:4, wobei der Montagekanal konkret bevorzugt eine Höhe von 5 bis 6 mm beträgt und das Leuchtengehäuse somit eine Höhe von 25 bis 26 mm. Dieses Verhältnis muss aber nur abschnittsweise ¼ gegeben sein und kann in anderen Bereichen in Längserstreckungsrichtung der Flachleute durchaus auch abweichend ausgebildet sein.

Der Montagekanal kann in einer Weiterentwicklung zudem mindestens eine Indirektlichtöffnung umfassen, in welche vorzugsweise als LED-Platinen ausgebildete Indirektleuchtmittel eingesetzt sind, die also gegenüber der Kanalebene nochmals nach unten versetzt sind, und zwar vorzugsweise um die Stärke der LED-Platinen. Somit können die LED-Platinen für die Montage und Wartung einfach oberseitig in die Indirektlichtöffnungen des Leuchtengehäuses eingesetzt und in diesen fixiert werden.

Vorzugsweise ist der Montagekanal in Einbaulage über Kanalabdeckungen verdeckt, welche vorzugsweise mit dem Montagekanal innenseitig verrasten bzw. in diesen einschnappen.

Bei der als Pendelleuchte ausgebildeten Flachleuchte umfasst der Geräteträger in einer zweiten Ausgestaltung ein Geräteträgeroberteil und ein Geräteträgerunterteil, wobei das Geräteträgerunterteil zum Einschieben in den Montagekanal ausgebildet ist, was vorzugsweise dadurch erfolgt, dass in diesem Geräteträgerunterteil seitliche, sich in dessen Längsrichtung erstreckende Einschubleisten vorgesehen sind, welche unterhalb der Hinterschnitte bzw. des Hinterschnitts des Montagekanals einschiebbar sind. An diesen Einschubleisten können insbesondere aus der oberen Ebene dieser Einschubleisten hervorragende Distanzprägungen vorgesehen sein, welche in Einbaulage lagefixierend gegen einen korrespondierend ausgebildeten Vorsprung des oder der Hinterschnitte des Montagekanals anliegen, um eine Bewegung zwischen Geräteträgerunterteil bzw. Geräteträger und Leuchtengehäuse zu vermeiden.

Die erfindungsgemäße Flachleuchte kann insofern sowohl als Deckenanbauleuchte ausgebildet sein, welche dann z.B. mittels des Geräteträgers an einem Baukörper befestigt wird, oder als Pendelleuchte, die also über eine Seilabhängung von einer Decke abgehängt ist. Bei der Ausgestaltung als Deckenanbauleuchte ist die zuvor beschriebene indirekte Beleuchtung in dem oberen Montagekanal besonders zweckmäßig.

Vorzugsweise ist zur Realisierung der gewünschten niedrigen Bauhöhe die Flachleuchte als Kanteneinstrahlungsleuchte ausgebildet, die also in den seitlichen Schenkeln des Leuchtengehäuses ein seitlich angeordnetes LED-Leuchtmittel umfasst, welches diesem ausgestrahlten Lichtstrom seitlich in eine Lichtleiterplatte einstrahlt, die z. B. über eine Störstellenstruktur oder einen Reflektor auf der Oberseite das seitlich so eingekoppelte Licht aus der Lichtaustrittöffnung heraus (Direktlichtung) durch eine untere Hauptfläche der Lichtleiterplatte abstrahlt.

Das Befestigung der Lichtleiterplatte in dem Leuchtengehäuse ist bevorzugt ausgebildet zur Reduzierung einer Schattenbildung. Bei der Ausbildung der Halterung als ein Auflager, auf welcher die Lichtleiterplatte z.B. in dem Gehäuse aufliegt, weist dieses Auflager in Direktlichtrichtung eine Steigung auf, so dass das Auflager in Direktlichtrichtung aus dem angestrahlten Lichtfeld zurücktritt, schließt also mit einer an die äußere Kante des Auflagers angelegten Vertikalen einen spitzen Winkel von z.B. 45 Grad ein.

Zur Entblendung kann in Direktlichtung unterhalb der Lichtleiterplatte, vorzugsweise unter Zwischenschaltung eines Abstandes, eine lichtdurchlässige, insbesondere transluzente Entblendungsplatte in Form einer Prismenplatte vorgesehen sein.

Verschlossen wird die Lichtaustrittöffnung vorzugsweise durch eine Leuchtenabdeckung, die als Diffusor ausgebildet sein kann. Die bevorzugte Ausführungsform sieht eine etwa 2 bis 2 ½- fache Höhe der Lichtleiterplatte im Verhältnis zur Prismenplatte vor, wobei die Lichtleiterplatte eine Höhe bzw. Stärke von 4 mm und die Prismenplatte eine Höhe bzw. Stärke von 1,8 mm aufweist.

Zur weiteren Verbesserung der Entblendung ist die Leuchtenabdeckung vorzugsweise einseitig satiniert, insbesondere unterseitig aufgeraut, zur Bildung einer diffusen Direktlichtaustrittsfläche.

Bei der bevorzugten Ausführungsform ist die Leuchtenabdeckung im Wesentlichen als U-förmige Schale ausgebildet, die einen unteren, in der Seitenansicht rechteckigen Lichtaustrittsbereich aufweist, von dem sich eine auf der Oberseite von der Außenkante nach innen versetzte, umlaufende Nut nach oben erstreckt, die sodann in einen sich wiederum zur Außenkante erstreckenden Halterand übergeht, der angepasst ist zum Einsetzen in eine Aufnahmeöffnung bzw. Aufnahmerille an der Unterseite des Leuchtengehäuses. Vorzugsweise wird somit eine Schattenfuge zwischen der Unterseite des Leuchtengehäuses und der Oberseite der Leuchtenabdeckung gebildet, wobei der Außenrand der Leuchtenabdeckung und der Außenrand des Leuchtengehäuses zur Erzeugung eines besonders harmonischen Gesamteindrucks bevorzugt zwar einander entsprechen, aber in der Höhe zwischen Unterseite Leuchtengehäuse und Oberseite Leuchtenabdeckung ein Abstand zur Bildung der Schattenfuge ausgebildet ist, der zwischen 0,5 bis 2 mm, vorzugsweise 1 mm beträgt.

Das Licht wird also von den seitlich in dem Leuchtengehäuse angeordneten LEDs entlang der mittigen optischen Achse in die Lichtleiterplatte seitlich eingekoppelt, von der Lichtleiterplatte durch den oberseitigen Reflektor oder die oberseitige Störstellenstruktur in der Direktlichtrichtung - nach unten - gerichtet, tritt durch die unter der Lichtleiterplatte angeordnete Prismenplatte hindurch und trifft schließlich durch die Leuchtenabdeckung und deren zur Erzeugung von diffusem Licht erzeugende Unterseite in der Direktlichtrichtung als Direktlicht auf die Sehaufgabe.

Die Prismenplatte hilft ferner die die vorzugsweise seitlich angeordnete Direktlichtquelle zu verbergen, so dass die Leuchte nicht auf einer Seite heller erscheint als auf der anderen.

In Direktlichtstrahlrichtung umfasst das optische System somit vor der das seitlich eingekoppelte Licht nach unten auf die Sehaufgabe abstrahlende Lichtlenkungsplatte, die vorzugsweise ebenfalls als transluzente PMMA-Scheibe mit einer oberseitigen Störstellenstruktur ausgebildet ist, zur weiteren Entblendung und Erhöhung der Lichtdiffusion die ebenfalls transluzente Prismenscheibe bzw. Mikroprismenplatte. Durch weiteres Vorschalten der Leuchtenabdeckung in Direktlichtrichtung, welche vorzugsweise an der unteren Lichtaustrittsfläche ebenfalls diffusionserhöhende Eigenschaften aufweist, kann die Lichtdiffusion noch weiter erhöht werden, so dass der Rand der Leuchte durch die untere Lichtaustrittsfläche gar nicht mehr oder nur noch sehr geringfügig sichtbar ist. Somit wird erfindungsgemäß eine sehr homogene und einheitliche Lichtaustrittsfläche realisiert, so dass man durch Anordnung mehrerer derartiger Leuchten nicht direkt nebeneinander eine völlig homogen leuchtende Lichtfläche erzeugen kann.

Der Rand kann noch besser verborgen werden, indem - in der Höhe gesehen - zwischen der Unterkante der seitlichen Seitenteile des Leuchtengehäuses und der Oberseite der Leuchtenabdeckung ein Abstand vorgesehen ist, welcher so eine vorzugsweise umlaufende Schattenfuge zwischen der Leuchtenabdeckung und dem Leuchtengehäuse bildet. Diese Schattenfuge beträgt vorzugsweise 1 bis 2 mm, bevorzugt 1,5 mm.

Wenn nunmehr, was bei der bevorzugten Ausführungsform der Fall ist, zudem die äußeren Umfangsflächen der Leuchtenabdeckung und des Leuchtengehäuses korrespondierend sind, also im Wesentlichen die gleichen äußeren Abmessungen aufweisen und die Leuchtenabdeckung zudem als flacherer, wannenförmiger Körper ausgebildet ist als das Leuchtengehäuse hoch ist, bildet diese Leuchtenabdeckung einen nach unten die Leuchte abschließenden, seitlich umlaufenden Leuchtrand bzw. Lichtrand. Vorzugsweise beträgt dieser Lichtrand etwa ein Zehntel der Gesamthöhe des Leuchtengehäuses ohne Geräteträger.

Das Leuchtengehäuse ist vorzugsweise als wannenförmige Schale ausgebildet, welche die unterseitige Lichtaustrittsöffnung der Flachleuchte in Einbaulage verschließt. Die Diffusionsmittel umfassen vorzugsweise eine unterseitige satinierte bzw. aufgeraute Lichtaustrittsfläche an der Leuchtenabdeckung, die besonders bevorzugt an der äußeren Seite der Leuchtenabdeckung durch Sandstrahlung erzeugt wird.

Zur Montagevereinfachung bzw. Montagesicherung kann die Verbindungsanordnung zudem ein Fangsystem umfassen, welches zwischen einem Gehäuseteil, vorzugsweise einem Geräteträgergehäuse, sowie einem Leuchtengehäuse der Flachleuchte wirkt.

Dieses Fangsystem umfasst vorzugsweise zwei Drahtfedern, die bei der Montage an den Stirnenden zwischen dem an der Decke befestigten Geräteträgergehäuse und dem Leuchtengehäuse wirken und ein Herabfallen des Leuchtengehäuses verhindern bzw. eine 1-Mann-Montage ermöglichen.

Die Drahtfedern bestehen vorzugsweise aus einem Federstahl und sind grundsätzlich doppeltgewinkelt ausgebildet, weisen also in der Frontansicht eine im Wesentlichen W-förmige Gestalt mit einem sich entlang einer Federlängsachse erstreckenden Mittelsteg auf, der sich an beiden Enden nach unten zur Bildung von zwei bogenförmigen Montierbögen erstreckt, welche in Einbaulage Schrauben, Stifte oder dergleichen an dem Fügepartner der Verbindungsanordnung an dem Leuchtengehäuse umgreifen, sich dann wieder nach oben erstrecken und an mit ihren Außenende als Eingriffenden ausgebildet sind, wozu diese vorzugsweise etwa auf der Höhe des Mittelstegs befindliche Rasthaken umfassen, die in Einbaulage innenseitig in Auflagerinnen, Auflager oder dergleichen des Geräteträgers eingreifen.

Dieses Fangsystem funktioniert wie folgt:
Zunächst wird ein Deckenhalter an einer Decke oder einem Bauträger montiert, der vorzugsweise schalen- bzw. kastenförmig ausgebildetes Geräteträgergehäuse ausgebildet ist. Der Deckenhalter weist im Bereiche seiner Stirnenden als Zweitfügepartner ausgebildete Gegenstücke mit Einstecklaschen der Verbindungsanordnung auf. Ferner umfasst dieser vorzugsweise innenseitig ausgebildete Auflager ausgebildet, vorzugsweise sind hierzu die unteren Kanten nach innen umgebogen.

An der Oberseite des Leuchtengehäuses, vorzugsweise in dem mittigen Montagekanal des Leuchtengehäuses, sind axial in Leuchtenlängsachse beabstandet zueinander nach oben ragende Montagewinkel angeordnet, welche die Zweifügepartner der Verbindungsanordnung bilden. Diese weisen insofern Einstecköffnungen auf, die komplementär zu den Einstecklaschen der Gegenstücke und zu deren Aufnahme in Einbaulage ausgebildet sind. In Einbaulage greifen die Einstecklaschen der Gegenstücke an dem Geräteträgergehäuse in Einstecköffnungen der Montagewinkel an dem Leuchtengehäuse ein bzw. sitzen in diesen, so dass somit die unverlierbare, aber lösbare Verbindung zwischen Geräteträgergehäuse und Leuchtengehäuse realisiert wird.

Zunächst werden die an dem Leuchtengehäuse vormontierten Drahtfedern mit den außenseitigen Rasthaken in die Auflager des Geräteträgergehäuses eingehängt. In einer Vorfixierungsstellung hängt das relativ schwere Leuchtengehäuse somit selbstständig, im Wesentlich senkrecht erstreckend an den Drahtfedern. Nunmehr kann die Verdrahtung der Leuchte von einem Handwerker angeschlossen werden, und zwar ohne Notwendigkeit von Hilfestellung durch einen Zweiten.

Für die Endbefestigung wird das Leuchtengehäuse sodann um die einseitig eingehängten Drahtfedern geschwenkt bis das gegenüberliegende das freien Hakenenden der Drahtfedern in die anderen Auflagerinnen des Geräteträgergehäuses eingreifen. Eventuell kann auch in dieser Stellung die Verdrahtung erfolgen, da das Leuchtengehäuse ja noch vertikal von der Innenseite des Geräteträgers beabstandet ist und insofern Zugang zu den elektrischen Komponenten bestehen dürfte.

So kann das Leuchtengehäuse einseitig abgewinkelt innenseitig über die eingehängten Drahtfedern hängend an dem Geräteträger vorfixiert werden.

Schließlich wird das Leuchtengehäuse vertikal angehoben und zum Schluss nach vorne, also in Längserstreckungsrichtung der Leuchte geschoben, damit die Rastlaschen der Einsteckelemente in die Aufnahmeelemente eingreifen. Erst in dieser Montagestellung nach Ausführung der Horizontalbewegung ist die Leuchte in der Endlage, in der die die Einsteckelemente in die Aufnahmeelemente, die Verbindungsanordnung also greift.

Das Fangsystem dient somit der Vormontage. Es greift allerdings auch wieder, wenn das Leuchtengehäuse horizontal verschoben wird und die Einsteck- und Aufnahmeelemente außer Eingriff kommen und verhindert damit ein ungewolltes Herabfallen der Leuchte, dient also insofern auch als Sicherungssystem.

Weitere Merkmale und Vorteile der vorliegenden Erfindung werden deutlich anhand der nachfolgenden Figurenbeschreibung bevorzugter Ausführungsbeispiele unter Bezugnahme auf die beiliegenden Abbildungen. In dieser Hinsicht wird Richtungsterminologie wie etwa "oben", "unten", "vorne", "hinten", "vorderes", "hinteres", usw. in Bezug auf die Orientierung der beschriebenen Figur(en) verwendet. Da Komponenten von Ausführungsformen in einer Anzahl verschiedener Orientierung positioniert werden können, dient die Richtungsterminologie zur Veranschaulichung und ist auf keinerlei Weise einschränkend. Es versteht sich, dass andere Ausführungsformen benutzt und strukturelle oder logische

Änderungen vorgenommen werden können, ohne von dem Schutzumfang der vorliegenden Erfindung abzuweichen. Die folgende ausführliche Beschreibung ist nicht im einschränkenden Sinne aufzufassen. Im Rahmen dieser Beschreibung werden die Begriffe "verbunden", "angeschlossen" sowie "integriert" verwendet zum Beschreiben sowohl einer direkten als auch einer indirekten Verbindung, eines direkten oder indirekten Anschlusses sowie einer direkten oder indirekten Integration. In den Figuren werden identische oder ähnliche Elemente mit identischem Bezugszeichen versehen, soweit dieses zweckmäßig ist. Die Darstellungen in den Figuren sind im Wesentlichen maßstäblich. Zur Veranschaulichung von Details können jedoch bestimmte Bereiche für den Fachmann erkennbar übertrieben groß dargestellt sein. Darüber hinaus können die Zeichnungen plakativ vereinfacht sein und enthalten nicht jedes bei der praktischen Ausführung gegebenenfalls vorhandene Detail.

Sofern nicht anders angegeben, beziehen sich der unbestimmte Artikel und der bestimmte Artikel nicht nur auf ein einzelnes Bauteil, sondern sind zu verstehen als "mindestens eins". Die Terminologie umfasst die zuvor genannten Worte, Abwandlungen davon sowie ähnliche Bedeutungen. Ferner sollte verstanden werden, dass die Begriffe "etwa", "im Wesentlichen" und ähnliche Begriffe in Verbindung mit den Dimensionen und einer Eigenschaft einer Komponente der Erfindung die beschriebene Dimension und Eigenschaft nicht als strikte Grenze oder Parameter beschreiben und geringfügige Abwandlungen davon nicht ausschließen, welche funktional ähnlich sind. Zumindest umfassen Beschreibungsteile mit numerischen Parametern auch Abwandlungen dieser Parameter gemäß den mathematischen und fertigungstechnischen Prinzipien im Stand der Technik, z.B. Rundungen, Abweichungen und andere systematische Fehler, Fertigungstoleranzen etc. Es zeigen:
- Figur 1:: eine isometrische Draufsicht einer erfindungsgemäßen Deckenanbauleuchte;
- Figur 2:: die Ansicht gemäß Figur 1 bei entnommenem Geräteträgeroberteil;
- Figur 3:: die Ansicht gemäß Figur 2 bei entnommenen Kanalabdeckungen;
- Figur 4:: eine vergrößerte isometrische Ansicht des Geräteträgeroberteils von unten;
- Figur 5:: einen Schnitt entlang der Linie V-V gemäß Figur 3 bzw. eine Ansicht vom hinteren Ende der Leuchte mit durch die Haltefeder gesichertes Geräteträgeroberteil;
- Figur 6:: eine vergrößerte perspektivische Ansicht einer hinteren Deckenbefestigungsverbindungsanordnung in Einbaulage;
- Figur 7:: eine vergrößerte perspektivische Ansicht der zur in Figur 6 gehörenden vorderen Deckenbefestigungsverbindungsanordnung;
- Figur 8:: einen vergrößerten perspektivischen Querschnitt des hinteren Endes der Leuchte gemäß Figur 1;
- Figur 9:: einen vergrößerten Längsschnitt der vorderen Deckenbefestigungsverbindungsanordnung für die Deckenbefestigung;
- Figur 10:: eine isometrische Draufsicht einer erfindungsgemäßen Pendelleuchte;
- Figur 11:: eine vergrößerte isometrische Ansicht des vorderen Endes der Pendelleuchte gemäß Figur 10;
- Figur 12:: die Ansicht gemäß Figur 10 bei entnommenem Geräteträgeroberteil;
- Figur 13:: die Ansicht gemäß Figur 10 bei entnommenen entfernten Geräten und Kanalabdeckungen;
- Figur 14:: eine perspektivische isometrische Ansicht des Geräteträgerunterteils, welches mit dem Geräteträgeroberteil die Pendelverbindungsanordnung bildet;
- Figur 15:: eine vergrößerte perspektivische Frontansicht der Leuchte gemäß Figur 10 bei entferntem Kopfstück und entfernter Kanalabdeckung;
- Figur16:: einen vergrößerten Querschnitt der Pendelleuchte gemäß Figur 10;
- Figur 17:: einen nochmals vergrößerten Querschnitt des linken Bildabschnitts aus Figur 16 zur Verdeutlichung des optischen Systems der Kanteneinstrahlung;
- Figur 18:: einen nochmals vergrößerten Querschnitt des linken Bildabschnitts aus Figur 17;
- Figur 19: eine Stirnansicht der Befestigung des von dem Geräteträgeroberteil getrennten Leuchtengehäuses und eine Ansicht der Drahtfeder des Fangsystems;
- Figur 20: eine perspektivische Innenansicht auf die an dem Geräteträgerunterteil der Verbindungsanordnung gehäuseseitig befestigten Drahtfeder zur Verbindung mit dem Geräteträgergehäuse; und
- Figur 21: eine perspektivische Seitenansicht des Leuchtengehäuses und des Geräteträgergehäuses mit dazwischen angeordnetem Fangsystem vor dem Einrasten des Fangsystems an dem Geräteträgergehäuse.

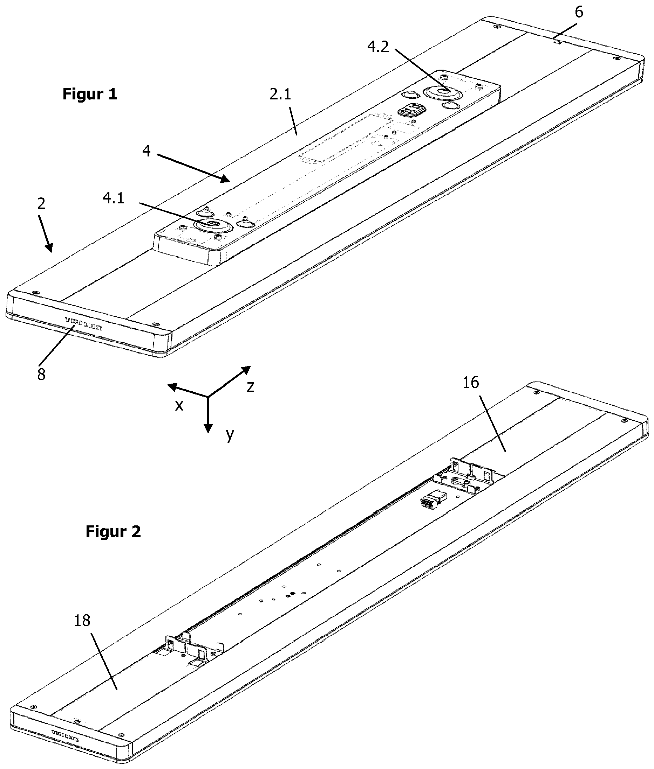

- Figur 1: zeigt eine isometrische Draufsicht der als

Deckenanbauleuchte ausgebildeten Flachleuchte mit ähnlich geometrisch ausgebildeten Leuchtengehäuse 2 und Geräteträgergehäuse 4, die beide im Wesentlichen rechteckig ausgebildet sind und eine etwa zehn Mal so große Breite wie Höhe aufweisen, wobei jedoch das Geräteträgergehäuse 4 deutlich kleiner als das Leuchtengehäuse 2 ausgebildet ist, vorliegend etwas mehr als ein ¼ der Größe des Leuchtengehäuses 2 beträgt und mittig auf der Leuchtengehäuseoberseite in der Art eines Doms oder eine Kuppel angeordnet ist. Das Geräteträgergehäuse 4 nimmt zum Betrieb der Leuchte erforderliche Geräte, wie Vorschaltgeräte, Anschlussklemmen, Schalter usw. auf, und dient ferner zur Befestigung an einer Decke, vorliegend mittels Schrauben, welche in Einbaulage die Schraubenöffnungen 4.1, 4.2. durchdringen.

Das Leuchtengehäuse 2 umfasst einen Grundkörper, der vorzugsweise als stranggepresstes Aluminiumprofil ausgebildet ist und einen die Leuchtengehäuseoberseite 2.1 bildenden, plattenförmigen Längssteg umfasst, an dessen außenseitigen Enden sich parallel zueinander und quer aus der Ebene der Leuchtengehäuseoberseite 2.1 nach unten erstreckende Seitenteile 2.7, 2.8 vorgesehen sind, welche somit die Höhe des Leuchtengehäuses 2 zum Großteil definieren.

Die Stirnenden des Leuchtengehäuses 2 sind durch geometrisch angepasste Kopfstücke 6, 8, verschlossen, die sich harmonisch an die Seiten mit Übergangsrundungen anschließen und zusammen mit dem Grundkörper des Leuchtengehäuses ein oberseitig geschlossenes, schalenförmiges Profil bilden. Die in den Figuren unterseitige Lichtaustrittsöffnung für den Direktlichtstrom zur direkten Ausleuchtung der Sehaufgabe ist durch eine transluzente Leuchtenabdeckung 10 verschlossen, welche über eine Schattenfuge 12 von der Unterseite des Leuchtengehäuses beabstandet ist und deren Höhe etwa 1/10 der Gesamthöhe der Flachleuchte ausmacht. Der äußere Umfangsrand der Leuchtenabdeckung 10 ist geometrisch angepasst an die Außenkontur des Leuchtengehäuses 12, schließt also umfänglich mit diesem ab und bildet bei einem Betrieb der Leuchte einen umlaufenden, unterseitigen Lichtrand, welcher der Flachleuchte einen besonders ästhetischen, aber auch technisch futuristischen Charakter verleiht.

In der Figur 2 ist das ebenfalls schalenförmige, oben geschlossene und unterseitig offene Geräteträgeroberteil 4.1 abgenommen, wodurch der mittig oberseitig in dem Leuchtengehäuse 2 ausgebildete Montagekanal 2.2 besser sichtbar ist, welcher sich oberseitig entlang der gesamten Längserstreckungsrichtung in dem Leuchtengehäuse 2 erstreckt, dessen Breite etwa 1/3 der Breite des Leuchtengehäuses 2 ausmacht und in welchem der Geräteträger 4 teilweise eingelassen ist bzw. sitzt.

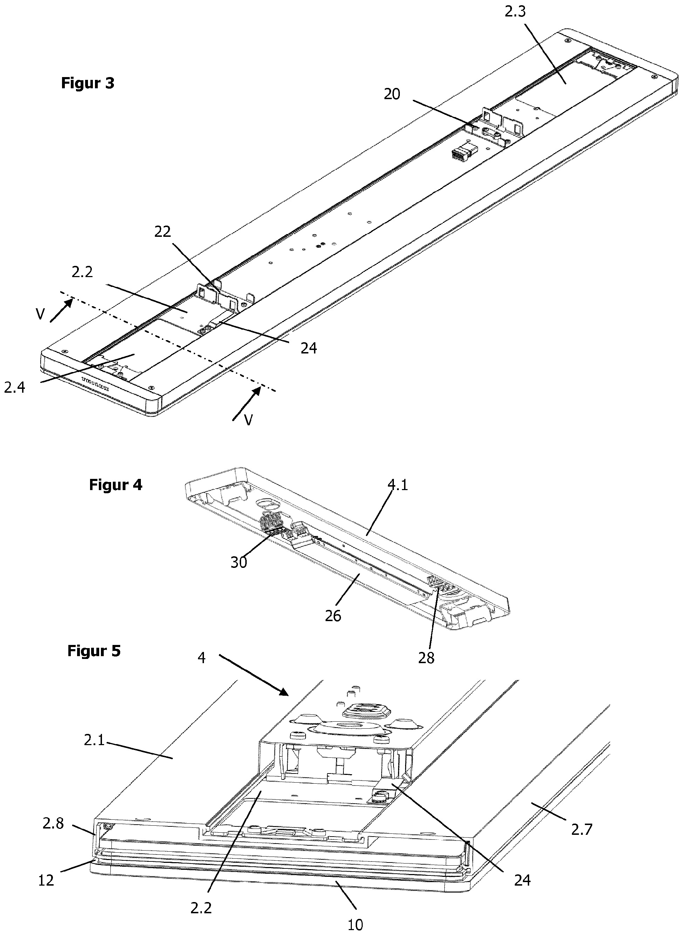

In der Figur 3 sind zudem die plattenförmigen Kanalabdeckungen 16, 18 entfernt, so dass der gesamte Montagekanal 2.2 zugänglich ist.

Deutlich erkennbar sind hier nunmehr die Montagewinkel 20, 22 zur Befestigung des Geräteträgeroberteils 4.1, von denen der in den Figuren rechtsseitige Montagewinkel den vorderen Montagewinkel 20 und der in den Figuren linksseitige Montagewinkel den hinteren Montagewinkel 22 bildet. Die Montagewinkel 20, 22, haben jeweils einen U-förmigen Querschnitt, sind als gewinkelte Blechprofile ausgebildet und umfassen eine in Einbaulage an der Unterseite des Montagekanals 2.2 befestigte Grundschenkel 20.1; 22.1, von dem sich an den Enden jeweils aus der Ebene des Grundschenkels 20.1, 22.1 parallel zueinander nach oben Befestigungslaschen erstrecken, wobei die in Einbaulage außenseitigen Befestigungslaschen 20.2, 22.2 größer ausgebildet sind und an den äußeren Rändern Einstecköffnungen 20.3, 20.4, 22.3, 22.4, aufweisen.

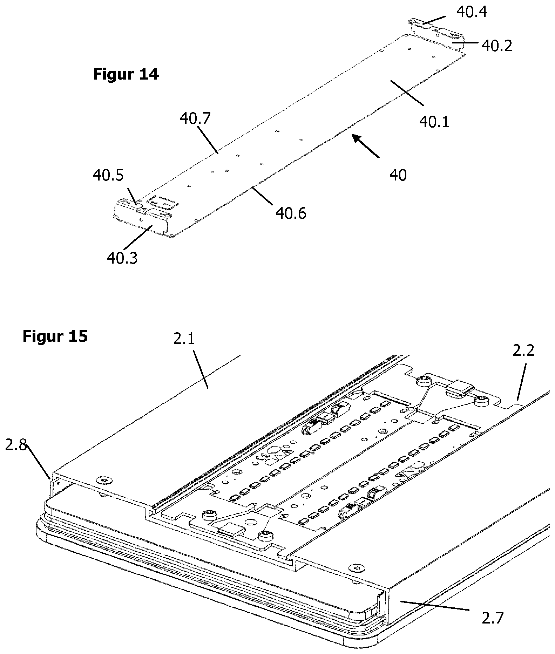

Am hinteren Ende ist eine in Längsrichtung der Flachleuchte wirkende Haltefeder 24 in dem Montagekanal 2.2 festgeschraubt, welche in Einbaulage gegen das hintere Stirnende des Geräteträgeroberteils 4.1 anliegt und dieses so lagefixiert, was in Figur 5 angedeutet ist, allerdings bei entferntem Stirnende des Geräteträgeroberteils 4.1. Hier ist aber auch deutlich erkennbar, dass das Geräteträgeroberteil 4.1 teilversenkt innerhalb des Montagekanals 2.2 im Verhältnis zur Leuchtengehäuseoberseite aufgenommen ist. Deutlich erkennbar sind auch die in dem Montagekanal 2.2 ausgebildeten Indirektlichtöffnungen 2.3, 2.4, deren Breite etwa der Breite des Montagekanals 2.2 entspricht, deren Länge aber nur etwa die Hälfte des Bereichs zwischen dem Stirnende des Geräteträgeroberteils 4.1 sowie dem Stirnende des Leuchtengehäuses 2 ausmacht. In diese Indirektlichtöffnungen 2.3, 2.4 sind, wie in der Vergrößerung gemäß Figur 15 näher dargestellt ist, zwei LED-Platinen nebeneinander angeordnet und in bekannter Weise mittels Halteklammern Weise befestigt, jedenfalls aber so, dass diese LED-Platinen aus der Kanalebene des Montagekanals 2.2 zusätzlich nochmals nach unten versetzt sind.

In Figur 4 ist das Geräteträgeroberteil 4.1 in isometrischer Ansicht von unten dargestellt, wobei hier das an der Oberseite befestigte Vorschaltgerät 26 sowie zwei Anschlussklemmen 28,30 sichtbar sind.

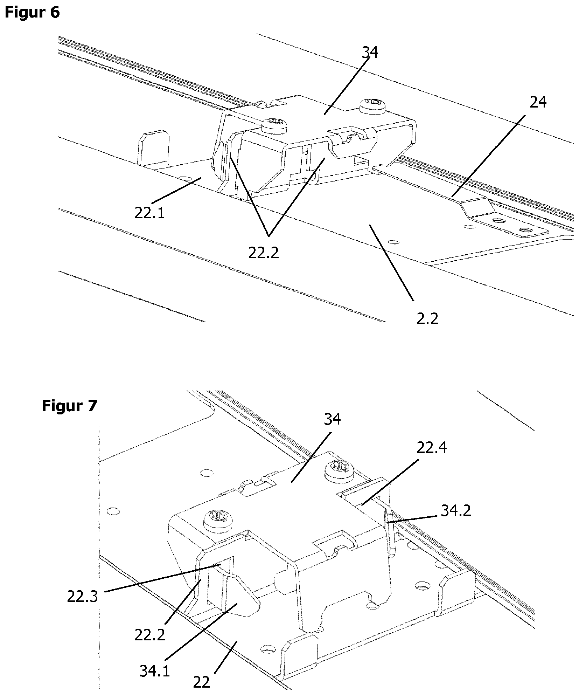

Im Bereich der Stirnenden sind an der Innenseite des Geräteträgeroberteils 4.1 zudem mit den in dem Montagekanal 2.2 befestigten Montageschenkeln 20, 24 in Einbaulage zusammenwirkenden Gegenstücke 32, 34 der zwischen Geräteträgeroberteil 4.1 und Leuchtengehäuse 2 wirkenden Verbindungsanordnungen befestigt, die ebenfalls als gekantete Blechprofile ausgebildet an der Innenseite des Geräteträgeroberteils 4.1 verschraubt sind. Diese Gegenstücke weisen in Einbaulage in die Einstecköffnungen 20.3,20.4; 22.3,22.4 eingreifende Laschen 32.1, 32.2; 34.1; 34.2 auf, wodurch das Geräteträgeroberteil 4.1 durch Ausführen einer kombinierten Schub- /Schwenk-Einbaubewegung vom hinteren Ende der Leuchte nach vorne zunächst mit dem vorderen Montagewinkel 20 verbunden bzw. in diesen eingesteckt wird und sodann nach unten geklappt wird, wo dann auch die Haltefeder 24 das hintere Stirnende des Geräteträgeroberteils 4.1 in Einbaulage sichernd so hintergreift, dass diese Haltefeder 24 einen in der Figur 6 sichtbaren Absatz an den Gegenstücken zwei 30, 34 elastisch lagefixierend hintergreift.

Die Figur 6 zeigt dann noch einmal bei entferntem Geräteträgeroberteil 4.1 das auf dem vorderen Montagewinkel 20 befestigte Gegenstück 32 in Einbaulage.

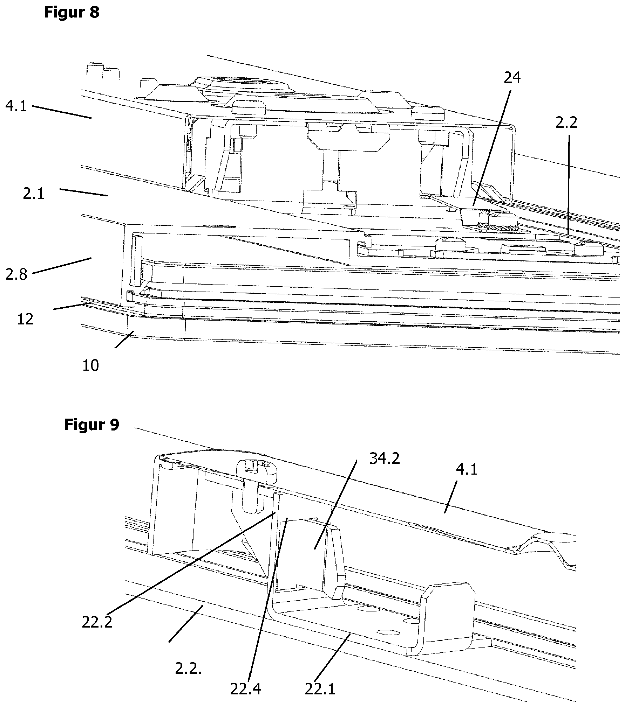

Figur 9 zeigt zudem einen vergrößerten Längsschnitt dieser Verbindungsanordnung umfassend die Montageschenkeln 22, 24 und die mit diesen zusammenwirkenden Gegenstücke 32, 34, und zwar mit dem aufgesetzten Geräteträgeroberteil 4.1.

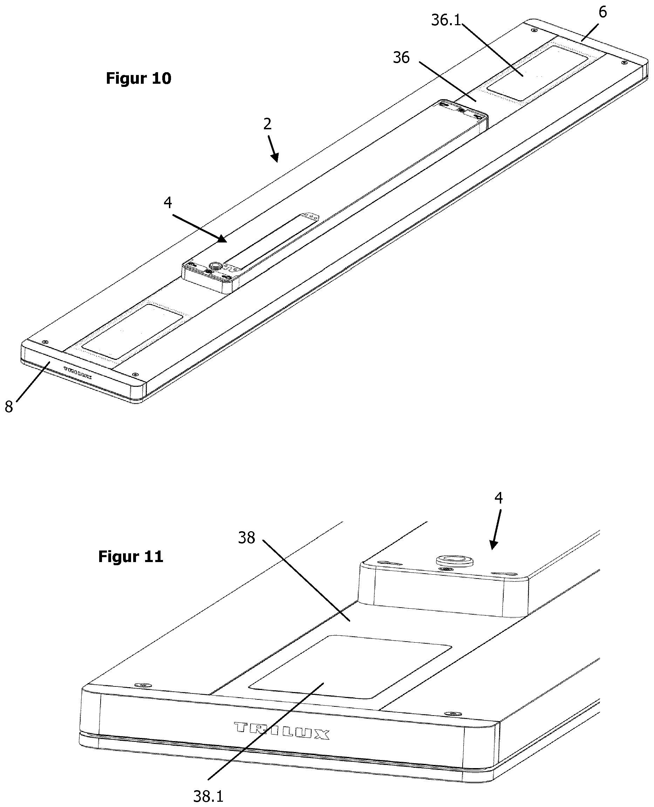

Figuren 10 bis 15 zeigen sodann verschiedene Ansichten einer als Deckenpendelleuchte ausgebildeten erfindungsgemäßen Flachleuchte. Bei dieser ist der Geräteträger anders ausgebildet, insbesondere zur Verwendung mit von der Decke abhängenden Seilkauschen.

Die geometrische Ausgestaltung des Leuchtengehäuses 2, der Leuchtenabdeckung 10 und des Geräteträgers 4 entspricht im Wesentlichen derjenigen in den vorangegangenen Figuren. Anders ausgebildet ist hier nur die Befestigungstechnik des Geräteträgers 4 an der Oberseite des Leuchtengehäuses 2 und das Vorsehen von Lichtaustrittsöffnungen 36.1,38.1 in den Kanalabdeckungen 36, 38, welche den Montagekanal 2.2 in Einbaulage oberseitig verschließen.

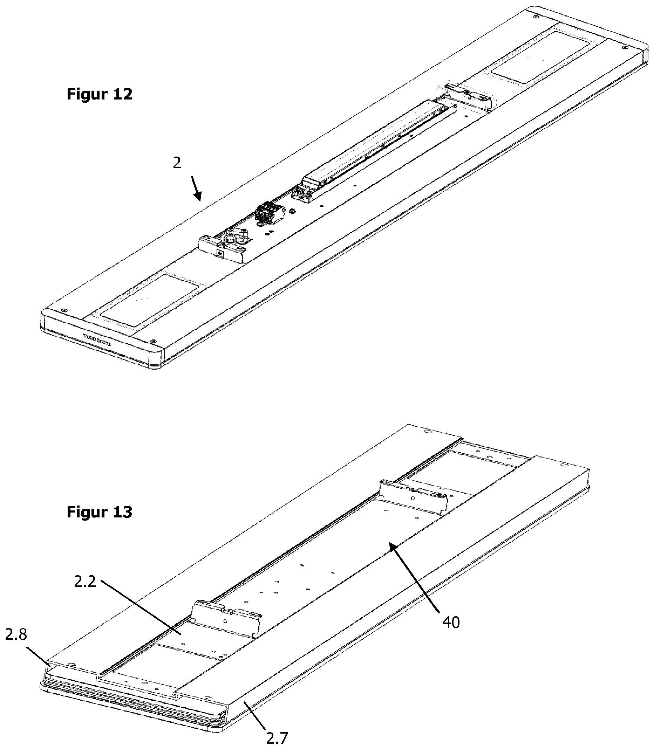

In der perspektivischen Ansicht gemäß Figur 13 sind diese Kanalabdeckungen 36, 38 entfernt, so dass der gesamte Montagekanal 2.2 sichtbar ist. Dieser hat wiederrum eine tiefe von ca. 6 mm im Verhältnis zur Gesamthöhe des Leuchtengehäuses von etwa 20 mm

Bei dieser Ausführungsform umfasst die Verbindungsanordnung zur Befestigung des Geräteträgeroberteils 4.1 an dem Leuchtengehäuse 2 ein klammerartiges und als gekantetes Blechprofil ausgebildete Geräteträgerunterteil 40, also ohne Vorschaltgerät 26 und Anschlussklemme 26, welches einen sich in Längsrichtung erstreckenden Grundschenkel 40.1 zur Befestigung auf der Montagekanaloberseite 2.2 aufweist und an dessen Stirnenden jeweils aus der Ebene des Grundschenkels 40.1 herausragende Kopfschenkel 40.2, 40.3 mit einer Höhe von etwas weniger als die Höhe des Geräteträgeroberteils 4.1 ausgebildet sind, die an oberseitigen Enden wiederum aufeinander zu, also nach innen gekantet sind zur Bildung von Haltelaschen 40.4, 40.5, die an ihren außenseitigen Stirnenden nutförmige Aufnahmen mit einer Verengung aufweisen, in welche nicht dargestellte Seilkauschen am Ende von Deckenseilen einer Deckenabhängung durch Öffnungen in der Geräteträgeroberteil 4.1 lösbar eingehängt werden können.

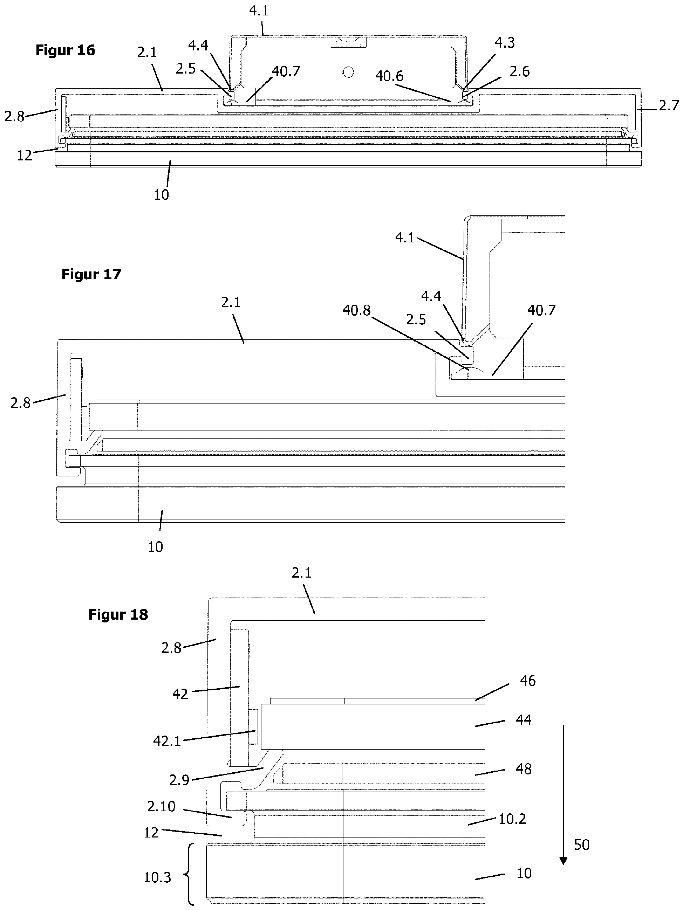

Wie insbesondere aus der Figur 16 zu entnehmen ist, sind an dem Grundschenkel 40.1 seitlich sich in Längsrichtung erstreckende Einschubleisten 40.6; 40.7 ausgebildet, deren Außendurchmesser angepasst ist zum Einsetzen in den Montagekanal 2.2, so dass diese Einschubleisten 40.6; 40.7 als in die Hinterschnitte des Montagekanals 2.2 so von den Stirnenden her einschiebbar sind, dass diese in Einbaulage einstückig an dem Montagekanal 2.2 angeformte und nach unten ragende Haltevorsprünge 2.5; 2.6 hintergreifen bzw. mit diesen in Wirkverbindung treten.

In den Figuren 16 bis 18 sichtbare und am unteren Ende des Gehäuseoberteils 4.1 nach innen vorgesehene Federleisten 4.3, 4.4 sitzen in auf der Leuchtengehäuseoberseite 2.1 ausgebildeten Aufnahmerinnen, welche direkt oberhalb der Haltevorsprünge 2.5, 2.6 vorgesehen sind.

Auf der Oberseite der Einschubleisten 40.6, 40.7 des Geräteträgerunterteils 40 sind in Längserstreckungsrichtung beabstandet zueinander mehrere als Distanzprägungen 40.8 ausgebildete Vorsprünge vorgesehen, welche in Einbaulage unterseitig gegen die Haltevorsprünge 2.5, 2.6 anliegen und insofern lagefixierend zwischen den Fügepartnern wirken und das federnde Gegenelement für die Federleisten 4.3, 4.4 am Leuchtengehäuseoberteil 4.1 bilden.

Das optische System der erfindungsgemäßen Flachleuchte ist am besten aus den vergrößerten Querschnittsansichten der Figuren 16 bis 18 verständlich, welches bei der Deckenanbau- und der Pendelleuchte gleich ausgebildet ist, aber in den Figuren 16 bis 18 nur in Bezug auf die links dargestellte Seite beschrieben, da die Flachleuchte spiegelsymmetrisch zur Mittellängsachse ausgebildet ist.

Demnach wird das optische System von dem Leuchtengehäuse 2 in Längsrichtung von den Seitenteilen 2.7, 2.8 eingefasst. Entlang der gesamten Längsseiten der Seitenteile 2.8 ist innenseitig erstreckend eine LED-Leiste 42 mit mehreren äquidistant auf dieser beabstandet angeordneten LEDs 42.1 befestigt. Diese LEDs 42.1 strahlen mittig in die linke seitliche Lichteintrittskante einer Lichtleiterplatte 44 ein, welche im vorliegenden Fall über einen oberseitigen Reflektor 46, der die Oberseite und die der Lichteintrittskante gegenüberliegende Kante der Lichtleiterplatte einfasst, das so eingekoppelte Licht rechtwinklig zur optischen Achse der LEDs 42 in Direktlichtrichtung 50 nach unten aus der Lichtaustrittsöffnung lenkt. Die Lichtleiterplatte 44 liegt mit den Außenrändern auf am unteren Ende des Seitenteile 2.7, 2.8 ausgebildeten Auflagestegen 2.9 auf, die sich innenseitig entlang der Längsachse der beiden Seitenteile 2.7, 2.8 erstrecken. Zudem schirmen diese Auflagestege 2.9 die unter einem Abstand in Direktlichtrichtung unterhalb der Lichtleiterplatte 44 angeordnete als Entblendungsplatte fungierende Prismenplatte 48 gegen Direkteinstrahlung des Lichts von den LEDs 42.1 ab.

Deutlich erkennbar weist ist der Auflagesteg 2.9 ausgebildet zur Reduzierung einer Schattenbildung und weist hierfür in diesem Fall eine sich in Direktlichtrichtung aufweitende Steigung. Die äußere obere Längskante der Prismenplatte 48 weist ferner eine Schräge korrespondierend zu der Steigung des Auflagestegs 2.9 auf, ist also geometrisch optimiert an den Auflagesteg angepasst, um ein möglichst geringes Spaltmaß zwischen der inneren Mantelfläche des Auflagestegs 2.9 und den äußeren Kanten der Prismenplatte 48 mit dem Zweck der Unterbindung von ungewünschtem Durchtritt von Direktlicht vorzusehen.

In Direktlichtrichtung 50 unterhalb von der Prismenplatte 48 ist beabstandet zu dieser sodann der obere Befestigungsrand 10.1 der Leuchtenabdeckung 10 in unterhalb des Auflagestegs 2.9 an der Innenseite der Seitenteile 2.7, 2.8 ausgebildeten Einfassungsrinnen eingeschnappt, die an ihren unteren Enden jeweils einen Abdeckungsauflagesteg 2.10 für die Auflage und zum Einfassen des Befestigungsrands 10.1 der Leuchtenabdeckung aufweist. In dieser Einfassungsrinne ist der Befestigungsrand 10.1 also lösbar rastend eingefasst Wiederum in der Direktlichtrichtung 50 weist die Leuchtenabdeckung unterhalb des Befestigungsrands 10.1 eine im Verhältnis zum Außenrand nach innen ragende Nut 10.2 auf, welche somit einen Hinterschnitt bildet, in welchen der Abdeckungsauflagesteg 2.10 eingreift. Die Höhe dieser Nut 10.2 ist aber etwa doppelt so hoch wie die Höhe des Abdeckungsauflagestegs 2.10, so dass zwischen der Unterseite des Abdeckungsauflagestegs 2.10 und dem unteren, in der Seitenansicht rechteckigen Lichtaustrittsbereich 10.3 der Leuchtenabdeckung 10 die erfindungsgemäße Schattenfuge 12 ausgebildet ist, welche die Seitenteile 2.7, 2.8 lichttechnisch durch den Lichtaustrittsbereich 10.3 der Leuchtenabdeckung 10 verdeckt.

Bei der vorliegenden Ausführungsform ist zwischen der Entblendungsscheibe und der Leuchtenabdeckung 10 kein Abstand vorgesehen, wohingegen zwischen der Lichtleiterplatte und Entblendungsscheibe hingegen ein Spalt von 1 bis 2 mm ausgebildet ist.

Es ist insofern zweckmäßig, das sich der Lichtaustrittsbereich 10.3 mit seinem Außenrand von der Nut bis zum Außenrand der Seitenteile 2.7, 2.8 erstreckt, mit diesen also korrespondierend ausgebildet ist bzw. an deren Geometrie so angepasst ist, dass der Lichtaustrittsbereich 10.3 und die Seitenteile 2.7, 2.8 eine harmonische und durchgängige Einheit bilden, welche über die Schattenfuge 12 voneinander beabstandet sind. Bei der Entwicklung der Erfindung hat sich gezeigt, dass für diesen technischen Effekt bereits eine Schattenfuge mit einer Höhe von 1 bis 1,5 mm ausreichend ist. Somit bildet der untere Lichtaustrittsbereich 10.3 erfindungsgemäß den die flache Leuchte unten einfassenden bzw. kaschieren Lichtrand.

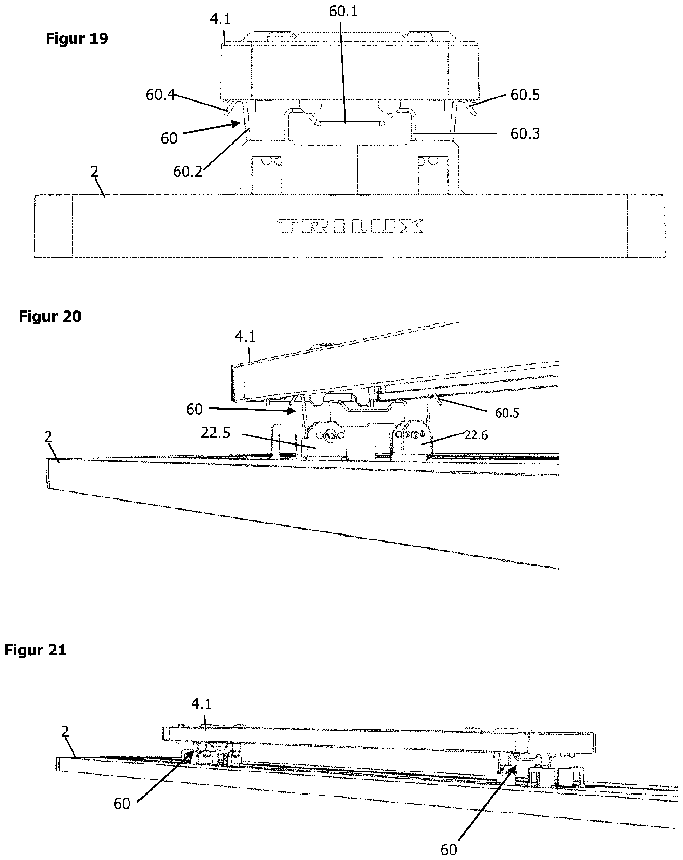

Die Figuren 19-21 zeigen den Aufbau und die Funktionsweise des erfindungsgemäßen Fangsystem.

Die Figur 19 zeigt eine Stirnansicht des von dem Geräteträgeroberteils 4.1 über zwei Haltefedern 60 beabstandete Leuchtengehäuse 2 vor der Endmontage. Die Haltefedern 60 sind an den Montagewinkeln 22, 22 mittels innenseitiger Einklemmlaschen 22.5, 22.6 der Montagewinkel der Verbindungsanordnung verschraubt.

Jede Haltefeder 60 besteht jeweils aus Federstahl und ist doppelt gewinkelt ausgebildet. Diese weisen also in der Frontansicht eine im Wesentlichen W-förmige Gestalt mit einem sich entlang einer Federlängsachse erstreckenden Mittelsteg 60.1 auf, der sich an beiden Enden zunächst unter 45° nach erstreckt und dann über horizontale Zwischenabschnitte sich um jeweils 90° nach unten erstreckt zur Bildung von bogenförmig Montierbögen 60.2, 60.3 und an diese jeweils anschließend sich wieder nach oben erstrecken bis knapp über die Höhe des Mittelstegs 60.1., um dort nochmals unter einem Winkel von etwa 45° mit der Horizontalen in endseitige, elastische Rasthaken 60.4, 60.5 überzugehen, welche in Einbaulage in die nach innen umgebogenen Längskanten 4.3 des Geräteträgeroberteils 4.1 Federn eingreifen.

Bei dieser Ausführungsform umfassen die Montagewinkel 20, 22 zusätzlich an dem hinteren, also jeweils zum Leuchtenmitte gerichteten Ende Einklemmlaschen 22.5, 22.6 für die Haltefedern 60, welche mit Schrauben 62, 64 die Haltefeder 60 unverlierbar an Montagewinkeln 20, 22 fixieren.

Es versteht sich für den Fachmann, dass das Fangsystem aber nicht nur für die Verwendung in der vorliegenden Flachleuchten mit der vorgenannten Verbindungsanordnung beschränkt ist, sondern für jeweilige Systeme verwendbar ist, bei denen es darum geht, eine schwere Leuchte im Rahmen einer 1-Mann-Montage einfach an einem Halter einfach zu montieren.

Eine besonders bevorzugte Ausbildung der erfindungsgemäßen Flachleuchte weist folgende Abmessungen auf:

| | |
|---|---|
| Höhe des Leuchtengehäuses | 20 mm; |
| Höhe des Leuchtengehäuses mit Leuchtenabdeckung | 27 mm |
| Höhe der Schattenfuge | 1,5 mm |
| Höhe des Lichtaustrittsbereichs der Leuchtenabdeckung | 5,5 mm |
| Tiefe des Montagekanals (Abstand Leuchtengehäuseoberseite zur Kanalfläche Montagekanal) | 6 mm |
| Bevorzugtes Verhältnis Höhe des Leuchtengehäuses : Höhe des Lichtaustrittsbereichs | 3:1 bis 4:1 |
| Bevorzugtes Verhältnis der Höhe bzw. Tiefe des Montagekanals zur Höhe des Leuchtengehäuses | 3:1 bis 4:1 |

### Bezugszeichenliste

- 2: Leuchtengehäuse
- 2.1: Leuchtengehäuseoberseite
- 2.2: Montagekanal
- 2.3, 2.4: Indirektlichtöffnung
- 2.5, 2.6: Haltevorsprung
- 2.7, 2.8: Seitenteil
- 2.9: Auflagesteg
- 2.10: Abdeckungsauflagesteg
- 4: Geräteträger
- 4.1: Geräteträgeroberteil
- 4.1, 4.2: Schrauböffnung
- 4.3: Längskante
- 6, 8: Kopfstück
- 10: Leuchtenabdeckung
- 10.1: Befestigungsrand
- 10.2: Nut
- 10.3: Lichtaustrittsbereich
- 12: Schattenfuge
- 14: Leuchtenabdeckung
- 16, 18: Kanalabdeckung
- 20: vordere Montagewinkel
- 20.1: Grundschenkel
- 20.2: äußere Befestigungslasche
- 20.3, 20.4: Einstecköffnung
- 22: hintere Montagewinkel
- 22.1: Grundschenkel
- 22.2: äußere Befestigungslasche
- 22.3, 22.4: Einstecköffnung
- 22.5, 22.6: Einklemmlasch
- 24: Haltefeder
- 26: Vorschaltgerät
- 28, 30: Anschlussklemmen
- 32: Gegenstück
- 32.1;32.2: Lasche
- 34: Gegenstück
- 34.1;34.2: Lasche
- 36, 38: Kanalabdeckung
- 36.1;38.1: Lichtaustrittsöffnung
- 40: Geräteträgerunterteil
- 40.1: Grundschenkel
- 40.2,40.3: Kopfschenkel
- 40.4, 40.5: Haltelasche
- 40.6, 40.7: Einschubleisten
- 42: LED-Leiste
- 42.1: LED
- 44: Lichtleiterplatte
- 46: Reflektor
- 48: Prismenplatte
- 50: Direktlichtrichtung
- 60: Haltefeder
- 60.1: Mittelsteg
- 60.2, 60.3: Montierbogen
- 60.4, 60.5: Rasthaken
- 62, 64: Schraube

## Patentansprüche

1. Flachleuchte umfassend ein Leuchtengehäuse (2), welches eine deutlich höhere Breite als Höhe und eine einem Baukörper zugewandte Leuchtengehäuseoberseite sowie einer Leuchtengehäuseunterseite umfassend eine Lichtaustrittöffnung ausgebildet zum Austritt eines Direktlichtstroms zur direkten Ausleuchtung einer Sehaufgabe aufweist, wobei das Leuchtengehäuse (2) ausgebildet ist zur Aufnahme eines Direktleuchtmittels, das den durch diese erzeugten Direktlichtstrom über ein optisches System direkt auf die Sehaufgabe abstrahlt, und auf der Leuchtengehäuseoberseite zudem ein Geräteträger (4) zur Aufnahme weiterer Leuchtenkomponenten vorgesehen ist, wobei die Flachleuchte als Kanteneinstrahlungsleuchte ausgebildet ist, welche eine Lichtleiterplatte (44) umfasst, in die als Direktleuchtmittel seitlich in dem Leuchtengehäuse angeordnete LEDs (42) einen durch diese erzeugten Lichtstrom seitlich einstrahlen, der z.B. über eine Störstellenstruktur oder einen Reflektor auf der Oberseite den seitlich eingekoppelten Lichtstrom aus einer Lichtaustrittöffnung heraus durch eine untere Hauptfläche der Lichtleiterplatte (44) in einer Direktlichtrichtung abstrahlt, wobei das Leuchtengehäuse (2) an der Leuchtengehäuseoberseite einen Montagekanal (2.2) umfasst, und dass der Montagekanal (2.2) ausgebildet ist zur teilweisen Aufnahme des Geräteträgers (4), dass der Montagekanal (2.2) als rinnenförmiger Körper ausgebildet ist, der ebenfalls eine deutlich größere Breite als Tiefe aufweist, vorzugsweise etwa 10 bis 13 Mal so breit wie tief ist, **dadurch gekennzeichnet, dass** der Montagekanal (2.2) eine Indirektlichtquelle umfasst.

2. Flachleuchte nach Anspruch 1, **DADURCH GEKENNZEICHNET, DASS** der Montagekanal (2.2) eine Kanalebene definiert, welche gegenüber der durch die Leuchtengehäuseoberseite definierten Ebene nach unten versetzt ist, und dass die Kanalebene ausgebildet ist als Montageebene für Leuchtenkomponenten.

3. Flachleuchte nach einem der vorhergehenden Ansprüche, **DADURCH GEKENNZEICHNET, DASS** diese mindestens eine Indirektlichtquelle aufweist, welche einen dem Direktlichtstrom entgegen strahlenden Indirektlichtstrom zur Erzeugung einer Indirektbeleuchtung aufweist.

4. Flachleuchte nach Anspruch 1, **DADURCH GEKENNZEICHNET, DASS** die Indirektlichtquelle gegenüber der Kanalebene nach unten versetzt ist.

5. Flachleuchte nach einem der Ansprüche 2 bis 4, **DADURCH GEKENNZEICHNET, DASS** der Montagekanal (2.2) von der Kanalebene sich zur Leuchtengehäuseoberseite erstreckende Montagekanalseitenwände umfasst.

6. Flachleuchte nach einem der vorhergehenden Ansprüche, **DADURCH GEKENNZEICHNET, DASS** der Montagekanal (2.2) mindestens einen Hinterschnitt aufweist.

7. Flachleuchte nach Anspruch 6, **DADURCH GEKENNZEICHNET, DASS** die Montagekanalseitenwände Hinterschnitte umfassen.

8. Flachleuchte nach Anspruch 6 oder 7, **DADURCH GEKENNZEICHNET, DASS** der mindestens eine Hinterschnitt einen Haltevorsprung (2.5, 2.6) aufweist.

9. Flachleuchte nach Anspruch 8, **DADURCH GEKENNZEICHNET, DASS** oberhalb des Haltevorsprungs eine Vertiefung zur lagefixierenden Aufnahme des Leuchtengehäuseoberteils (4.1) und/oder einer Kanalabdeckung (16, 18; 36, 38) ausgebildet ist.

10. Flachleuchte nach einem der vorhergehenden Ansprüche, **DADURCH GEKENNZEICHNET, DASS** die Höhe des Montagekanals (2.2) den Freiraum oberhalb des Direktlichtleuchtmittels und dem diesem zugeordneten optischen System in dem Leuchtengehäuse (2) einnimmt.

11. Flachleuchte nach einem der vorhergehenden Ansprüche, **DADURCH GEKENNZEICHNET, DASS** der Montagekanal (2.2) eine Kanalhöhe aufweist, und dass das Verhältnis der Kanalhöhe zur Höhe des Leuchtengehäuses 3:1 bis 4:1 beträgt.

12. Flachleuchte nach einem der vorhergehenden Ansprüche, **DADURCH GEKENNZEICHNET, DASS** sich der Montagekanal (2.2) entlang der gesamten Länge des Leuchtengehäuses (2) erstreckt.

## Claims

1. Flat light comprising a luminaire housing (2), which is significantly wider than high and has a luminaire housing top facing a structure as well as a luminaire housing bottom comprising a light housing aperture designed for exit of a direct luminous flux for direct illumination of a vision job, wherein the luminaire housing (2) is designed to accom modate a direct illuminant which emits a direct luminous flux generated thereby via an optical system immediately upon the vision job, and wherein is further provided a de vice support (4) for accommodating further luminaire elements, wherein the flat light is designed as an edge irradiation luminaire comprising a light guide plate (44) into which LEDs (42) arranged laterally in the luminaire housing as direct illuminants laterally ra diate a luminous flux generated by them, thus radiating the laterally injected luminous flux from a light exit aperture through a bottom principal face of the light guide plate (44) in a direct light direction e.g. via an array of imperfections or a reflector on the top face, wherein the luminaire housing (2) comprises at the luminaire housing top a mounting duct (2.2), which is designed to partially accommodate the device support (4), wherein the mounting duct (2.2) is formed as a groove shaped body which also has a width significantly greater than its depth, preferably 10 to 13 times as wide as deep, **characterized in that** the mounting duct (2.2) comprises an indirect light source.

2. Flat light according to claim 1, **characterized in that** the mounting duct (2.2) defines a duct plane, which is offset downwards versus the plane defined by the luminaire hous ing top, and that the duct plane is designed as mounting plane for luminaire elements.

3. Flat light according to one of the preceding claims, **characterized in that** it comprises at least one indirect light source, which has an indirect luminous flux opposed to the di rect luminous flux for generating an indirect illumination.

4. Flat light according to claim 1, **characterized in that** the indirect light source is offset downwards versus the duct plane.

5. Flat light according to one of claims 2 to 4, **characterized in that** the mounting duct (2.2) comprises mounting duct side walls extending from the duct plane to the lumi naire housing top.

6. Flat light according to one of the preceding claims, **characterized in that** the mounting duct (2.2) has at least one undercut.

7. Flat light according to claim 6, **characterized in that** the mounting duct side walls com prise undercuts.

8. Flat light according to claim 6 or 7, **characterized in that** the at least one undercut has a holding projection (2.5, 2.6).

9. Flat light according to claim 8, **characterized in that** a recess for firmly accommodating the luminaire housing top (4.1) and/or duct covering (16, 18; 36, 38) is formed above the holding projection.

10. Flat light according to one of the preceding claims, **characterized in that** the height of the mounting duct (2.2) occupies the free space in the luminaire housing (2) above the direct light illuminant and the optical system attributed thereto.

11. Flat light according to one of the preceding claims, **characterized in that** the mounting duct (2.2) has a duct height and that the ratio of the duct height to the height of the luminaire housing is 3:1 to 4:1.

12. Flat light according to one of the preceding claims, **characterized in that** the mounting duct (2.2) extends over the total length of the luminaire housing (2).

## Revendications

1. Appareil d'éclairage plat, comprenant un boîtier de lampe (2) qui a une largeur sensiblement supérieure à la hauteur et une face supérieure du boîtier de lampe tournée vers un bâtiment et une face inférieure du boîtier de lampe comprenant une ouverture de sortie de lumière formée pour la sortie d'un flux lumineux direct pour l'éclairage direct d'une tâche visuelle, dans lequel le boîtier de lampe (2) est formé pour recevoir un moyen lumineux directe, qui projette le flux lumineux direct produit par ce dernier directement sur la tâche visuelle par l'intermédiaire d'un système optique, et un support d'appareil (4) pour recevoir d'autres composants de lampe est également prévu sur la face supérieure du boîtier de lampe, la lampe plat étant conçu comme une lampe d'éclairage de bord qui comprend une plaque guide lumière (44) dans lequel des DELs (42) disposées latéralement dans le boîtier de lampe comme illuminant direct diffusent latéralement un flux lumineux produit par celles-ci, qui émis par exemple, via une structure d'imperfections ou un réflecteur sur la surface supérieure, le flux lumineux couplé latéralement à partir d'une ouverture de sortie de lumière à travers une surface principale inférieure de la plaque de guidage de la lumière (44) dans une direction de lumière directe, le boîtier de lampe (2) comprenant un canal de montage (2.2) sur le côté supérieur du boîtier, et que le canal de montage (2.2) est destiné à recevoir partiellement le support d'appareil (4), en ce que le canal de montage (2.2) est réalisé sous la forme d'un corps en forme de gouttière qui présente également une largeur nettement supérieure à la profondeur, de préférence environ 10 à 13 fois plus large que la profondeur, **caractérisé en ce que** le canal de montage (2.2) comprend une source lumineuse indirect.

2. Appareil d'éclairage plat selon la revendication 1, **caractérisé en ce que** le canal de montage (2.2) définit un plan de canal décalé vers le bas par rapport au plan défini par la face supérieure du boîtier de lampe, et **en ce que** le plan de canal est conçu comme plan de montage pour des composants de lampe.

3. Appareil d'éclairage plat selon la revendication 1, **caractérisé en ce qu'**il comporte au moins une source de lumière indirecte qui présente un flux lumineux indirect qui rayonne à contre-courant du flux lumineux directe afin de produire un éclairage indirect.

4. Appareil d'éclairage plat selon la revendication 1, **caractérisé en ce que** la source de lumière indirecte est décalée vers le bas par rapport au plan de canal.

5. Appareil d'éclairage plat selon l'une des revendications précédentes, **caractérisé en ce que** le canal de montage (2.2) présente des parois latérales de canal de montage s'étendant jusqu'à la surface supérieure du boîtier de lampe.

6. Appareil d'éclairage plat selon l'une des revendications précédentes, **caractérisé en ce que** le canal de montage (2.2) présente au moins une contre-dépouille.

7. Appareil d'éclairage plat selon l'une des revendications précédentes, **caractérisé en ce que** les parois latérales de canal de montage présentent des contre-dépouilles.

8. Appareil d'éclairage plat selon l'une des revendications précédentes, **caractérisé en ce que** ladite au moins une contre-dépouille présente une projection de retenue.

9. Appareil d'éclairage plat selon la revendication 8, **caractérisé en ce qu'**une dépression est formée au-dessus de la projection de retenue pour recevoir la partie supérieure (4.1) du boîtier de lampe et/ou un couvercle de canal (16, 18 ; 36, 38) afin de fixer la position.

10. Appareil d'éclairage plat selon l'une des revendications précédentes, **caractérisé en ce que** la hauteur du canal de montage (2.2) occupe l'espace libre au-dessus de la source lumineuse à lumière directe et du système optique qui lui est associé dans le boîtier de lampe (2).

11. Appareil d'éclairage plat selon l'une des revendications précédentes, **caractérisé en ce que** le canal de montage (2.2) présente une hauteur de canal et **en ce que** le rapport de la hauteur du canal à la hauteur du boîtier de lampe est de 3:1 à 4:1.

12. Appareil d'éclairage plat selon l'une des revendications précédentes, **caractérisé en ce que** le canal de montage (2.2) s'étend sur toute sa longueur.
